# EUROPEAN PATENT SPECIFICATION

(11) **EP 3 366 561 B1**
(45) Date of publication and mention of the grant of the patent: **12.06.2019**
(21) Application number: 18157101.9
(22) Date of filing: 16.02.2018
(51) Int. Cl.: B62K 25/04, B62M 7/02, B62M 7/12, B62K 11/04, B62K 11/10, B62K 19/46

(54) **REAR BRACKET STRUCTURE OF STRADDLED VEHICLE AND METHOD FOR ASSEMBLING THE SAME**
GRÄTSCHSITZFAHRZEUG UND VERFAHREN ZUR MONTAGE DAVON
VÉHICULE À ENFOURCHER ET SON PROCÉDÉ D'ASSEMBLAGE

(30) Priority: 28.02.2017 JP 2017037080
(43) Date of publication of application: 29.08.2018
(73) Proprietor: Yamaha Hatsudoki Kabushiki Kaisha, Iwata-shi Shizuoka 438-8501 (JP)
(72) Inventor: KOYANAGI, Daisuke, Iwata-shi, Shizuoka 438-8501 (JP); TAKESAKO, Wahei, Iwata-shi, Shizuoka 438-8501 (JP)
(74) Representative: Grünecker Patent- und Rechtsanwälte PartG mbB

(56) References cited:
- EP-A1- 1 306 296
- EP-A1- 1 939 083
- EP-A1- 2 783 956
- FR-A1- 2 955 826
- JP-U- H0 243 784

## Description

The present invention relates to a straddled vehicle and a method for assembling the same.

There are conventional straddled vehicles known in the art that include a power unit pivotally supported on a body frame, a rear wheel supported on the power unit, and a rear cushion unit, the rear cushion unit including an upper support portion supported on the body frame and a lower support portion supported on the power unit. In such a straddled vehicle, the rear cushion unit is placed on the side of the rear wheel.

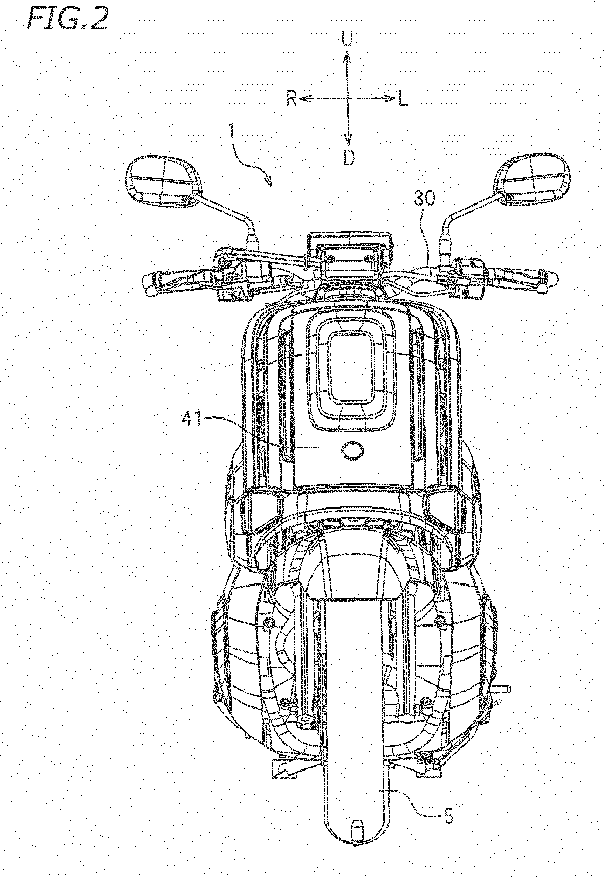

For example, FIG. 2 of Japanese Utility Model No. 2537734 illustrates such a straddled vehicle. In the straddled vehicle, the rear cushion unit is placed leftward of the rear wheel. The upper support portion of the rear cushion unit is supported on a left seat frame of the body frame. The lower support portion of the rear cushion unit is supported on a transmission case of the power unit that is located leftward of the rear wheel. The rear cushion unit absorbs the shock received by the rear wheel from the road surface. The force received by the rear wheel from the road surface is transmitted to the rear cushion unit via the power unit. In the straddled vehicle described above, a bracket extending inward in the vehicle width direction is welded to a portion of the left seat frame that is located directly under the storage box. Note that inward in the vehicle width direction means toward the center in the vehicle width direction. Outward in the vehicle width direction means away from the center in the vehicle width direction. The upper support portion of the rear cushion unit is supported on the bracket. Thus, the bracket extending inward in the vehicle width direction is interposed between the seat frame and the upper support portion of the rear cushion unit, thereby allowing the rear cushion unit to be placed close to the center in the vehicle width direction.

Among users who own straddled vehicles, there are needs to replace a normal-sized rear wheel with a rear wheel wider than the normal size. The rear wheel is attached to a rear end portion of the power unit and is placed on the side of the rear end portion of the power unit. The rear end portion of the power unit is located outward of the rear wheel in the vehicle width direction. Therefore, when a normal-sized rear wheel is replaced with a wider rear wheel, the position of the power unit is shifted outward in the vehicle width direction. In such a case, it is preferred that the position of the rear cushion unit is shifted outward in the vehicle width direction.

Conventionally, in order to shift the position of the rear cushion unit outward in the vehicle width direction, it was necessary to replace the bracket that is interposed between the seat frame and the upper support portion of the rear cushion unit. However, such bracket replacement was not easy. Thus, it was not easy to replace the rear wheel, considering the position change of the rear cushion unit.

As opposed to the idea of replacing the bracket, it has been first considered changing the shape of the bracket so as to accommodate the replacement with a rear wheel of a different width. However, a wider rear wheel receives a greater force from the road surface than a normal-sized rear wheel. When replaced with a wider rear wheel, the force to be transmitted to the seat frame via the rear cushion unit tends to increase. It has been found that it is therefore necessary, for the replacement of the rear wheel, not only to change the shape of the bracket, but also to consider the influence on the seat frame. However, it is not desirable to change the shape of the seat frame to accommodate the replacement with a rear wheel of a different width, as it will increase the cost of the body frame.

As a result of more in-depth study, it has been reached a conclusion that when a rear wheel is replaced with a wider rear wheel, it is possible to ensure the rigidity of the seat frame without changing the shape of the seat frame by devising how the force is transmitted to the seat frame. That is, it has been reached a conclusion that a rear wheel can be replaced without changing the shape of the seat frame by employing an arrangement such that the position of the upper support portion of the rear cushion unit in the vehicle width direction comes closer to the position of the seat frame in the vehicle width direction when the rear wheel is replaced with a wider rear wheel.

It is an object of the present invention to provide a straddled vehicle and a method for assembling the straddled vehicle that allows for easy replacement of a rear wheel with another rear wheel having a different width than that of the rear wheel. According to the present invention said object is solved by a straddled vehicle having the features of independent claim 1. Moreover, said object is also solved by a method for assembling the straddled vehicle according to claim 11. Preferred embodiments are laid down in the dependent claims.

A straddled vehicle according to the present teaching includes a body frame including a head pipe, a down frame extending downward from the head pipe as the vehicle is seen from the side, and a seat frame extending rearward and upward from the down frame as the vehicle is seen from the side. The straddled vehicle includes a storage box supported on the seat frame; a power unit pivotally supported on the seat frame; and a rear wheel supported on the power unit. The seat frame includes a first portion that overlaps with the storage box as the vehicle is seen from the side, and a second portion that is located rearward of the first portion as the vehicle is seen from the side and that overlaps with the storage box as the vehicle is seen from the back. The straddled vehicle further includes a first bracket plate provided on the second portion of the seat frame; and a second bracket plate provided on the second portion of the seat frame and located inward of the first bracket plate in a vehicle width direction. The straddled vehicle includes a collar placed between the first bracket plate and the second bracket plate, the collar including a first cylindrical portion having a first outer diameter and a second cylindrical portion having a second outer diameter greater than the first outer diameter. The straddled vehicle includes a rear cushion unit including a cylindrical upper support portion into which the first cylindrical portion of the collar is inserted and which is pivotally supported on the first cylindrical portion, and a lower support portion pivotally supported on the power unit. The first bracket plate is located outward, in the vehicle width direction, of a center of the seat frame in a vertical cross section that includes a center line of the collar. At least a portion of the second bracket plate is located inward, in the vehicle width direction, of an inner end of the seat frame in the vehicle width direction in the vertical cross section that includes the center line of the collar. The collar is formed so that the first cylindrical portion is located on a vertical line that passes through the center of the seat frame in the vertical cross section that includes the center line of the collar when the collar is placed so that the first cylindrical portion is located outward of the second cylindrical portion in the vehicle width direction between the first bracket plate and the second bracket plate.

According to the straddled vehicle described above, by changing the orientation of the collar placed between the first bracket plate and the second bracket plate, it is possible to easily change the position of the upper support portion of the rear cushion unit in the vehicle width direction. Therefore, when a relatively narrow rear wheel is installed, the upper support portion of the rear cushion unit can be placed relatively inward in the vehicle width direction. When a relatively wide rear wheel is installed, the upper support portion of the rear cushion unit can be placed relatively outward in the vehicle width direction. Therefore, rear wheels of different widths can easily be switched from one to another.

When a wider rear wheel is installed, the collar is placed so that the first cylindrical portion is located outward of the second cylindrical portion in the vehicle width direction. With the straddled vehicle, when a wider rear wheel is installed, the upper support portion of the rear cushion unit is located on the vertical line passing through the center of the seat frame in the vertical cross section. Therefore, the load to be transmitted from the rear cushion unit to the seat frame is likely to be transmitted close to the center of the seat frame. Thus, without changing the shape of the seat frame, the seat frame can effectively receive the load from the rear cushion unit. Therefore, since there is no need to change the shape of the seat frame, rear wheels of different widths can easily be switched from one to another.

According to one preferred aspect, the first cylindrical portion is located outward of the second cylindrical portion in the vehicle width direction. In the vertical cross section that includes the center line of the collar, the upper support portion of the rear cushion unit is placed on the vertical line that passes through the center of the seat frame.

According to the aspect above, it is possible to realize a straddled vehicle having a relatively wide rear wheel. With a straddled vehicle having a wider rear wheel, as compared with a straddled vehicle having a narrower rear wheel, the load to be received by the rear cushion unit tends to increase. According to the aspect above, in the vertical cross section, the upper support portion of the rear cushion unit is placed on the vertical line passing through the center of the seat frame. Therefore, the load applied to the rear cushion unit is likely to be supported by the seat frame in a well-balanced manner. Even if the load applied from the road surface to the rear cushion unit via the rear wheel and the power unit is relatively large, the rear cushion unit can be sufficiently supported by the seat frame.

According to another preferred aspect, the first cylindrical portion is located inward of the second cylindrical portion in the vehicle width direction. In the vertical cross section that includes the center line of the collar, the upper support portion of the rear cushion unit is placed inward, in the vehicle width direction, of the vertical line that passes through the center of the seat frame.

According to the aspect above, it is possible to realize a straddled vehicle having a relatively narrow rear wheel. The rear cushion unit is placed closer to the center in the vehicle width direction. Therefore, the dimension in the vehicle width direction can be reduced.

According to another preferred aspect, the first bracket plate is a flat plate extending vertically downward from the seat frame. The second bracket plate is a bent plate including a base portion extending inward in the vehicle width direction and downward from the seat frame, and a main portion extending vertically downward from the base portion.

According to the aspect above, it is possible to ensure the dimension between the first bracket plate and the second bracket plate while ensuring the strength with which the first bracket plate and the second bracket plate are attached to the seat frame.

According to another preferred aspect, in the vertical cross section that includes the center line of the collar, a dimension of the collar in a direction along the center line of the collar is greater than or equal to 1/2 a dimension of the seat frame in a direction parallel to the center line of the collar.

According to the aspect above, since the collar has a large dimension, the position of the first cylindrical portion can be changed by a large amount when the orientation of the collar is changed. Thus, it is possible to realize a large amount of change in the position of the rear cushion unit in the vehicle width direction. It is possible to increase the difference in width between the rear wheels that can be switched from one to another.

According to another preferred aspect, on the center line of the collar, a distance between the vertical line that passes through the center of the seat frame and the first bracket plate is less than a distance between the vertical line that passes through the center of the seat frame and the second bracket plate.

According to the aspect above, on the center line of the collar, the middle position between the first bracket plate and the second bracket plate is located inward, in the vehicle width direction, of the center of the seat frame. Therefore, the rear cushion unit can be placed close to the center in the vehicle width direction.

According to another preferred aspect, an outline of the seat frame in the vertical cross section that includes the center line of the collar is formed in an elliptical shape whose dimension in the vehicle width direction is greater than a dimension thereof in an up-down direction.

According to the aspect above, the rear cushion unit can be sufficiently supported by the seat frame.

According to another preferred aspect, the second bracket plate overlaps with the storage box as the vehicle is seen from the back.

According to the aspect above, the second bracket plate is located close to the center in the vehicle width direction. Therefore, the collar can be placed close to the center in the vehicle width direction. Thus, the rear cushion unit can be placed close to the center in the vehicle width direction.

According to another preferred aspect, the first bracket plate and the second bracket plate overlap with the storage box as the vehicle is seen from the back.

According to the aspect above, the first bracket plate and the second bracket plate are located close to the center in the vehicle width direction. Therefore, the collar can be placed close to the center in the vehicle width direction. Thus, the rear cushion unit can be placed close to the center in the vehicle width direction.

According to another preferred aspect, the collar is made of a metal. The straddled vehicle includes a rubber-made tubular member interposed between the upper support portion of the rear cushion unit and the collar.

According to the aspect above, since the collar has a high rigidity, the upper support portion of the rear cushion unit can be supported rigidly. On the other hand, since the rubber-made tubular member is interposed between the upper support portion of the rear cushion unit and the collar, the upper support portion of the rear cushion unit smoothly pivots on the collar when the power unit pivots. Also, the friction against the collar is reduced,

In a method for assembling the straddled vehicle of the present teaching, when a first rear wheel having a first width is used as the rear wheel, the collar is placed between the first bracket plate and the second bracket plate so that the first cylindrical portion is located inward of the second cylindrical portion in the vehicle width direction. When a second rear wheel having a second width greater than the first width is used as the rear wheel, the collar is placed between the first bracket plate and the second bracket plate so that the first cylindrical portion is located outward of the second cylindrical portion in the vehicle width direction.

According to the assembly method described above, the first rear wheel can easily be replaced with the second rear wheel. The second rear wheel can easily be replaced with the first rear wheel.

According to the present teaching, it is possible to provide a straddled vehicle that allows for easy replacement of a rear wheel with another rear wheel having a different width than that of the rear wheel.

### BRIEF DESCRIPTION OF THE DRAWINGS

FIG. 1 is a left side view of a motorcycle according to a preferred embodiment.
FIG. 2 is a front view of the motorcycle.
FIG. 3 is a plan view of the motorcycle.
FIG. 4 is a back view of a part of the motorcycle.
FIG. 5 is a left side view of a part of the motorcycle.
FIG. 6 is a back view of a left seat frame, a first bracket plate, a second bracket plate, etc.
FIG. 7 is a cross-sectional view taken along line VII-VII of FIG. 5 showing the left seat frame, the first bracket plate, the second bracket plate and a collar.
FIG. 8 corresponds to FIG. 4 showing the motorcycle with a wider rear wheel installed thereon.
FIG. 9 corresponds to FIG. 6 showing the motorcycle with a wider rear wheel installed thereon.
FIG. 10 corresponds to FIG. 7 showing the motorcycle with a wider rear wheel installed thereon.

### DETAILED DESCRIPTION OF THE PREFERRED EMBODIMENTS

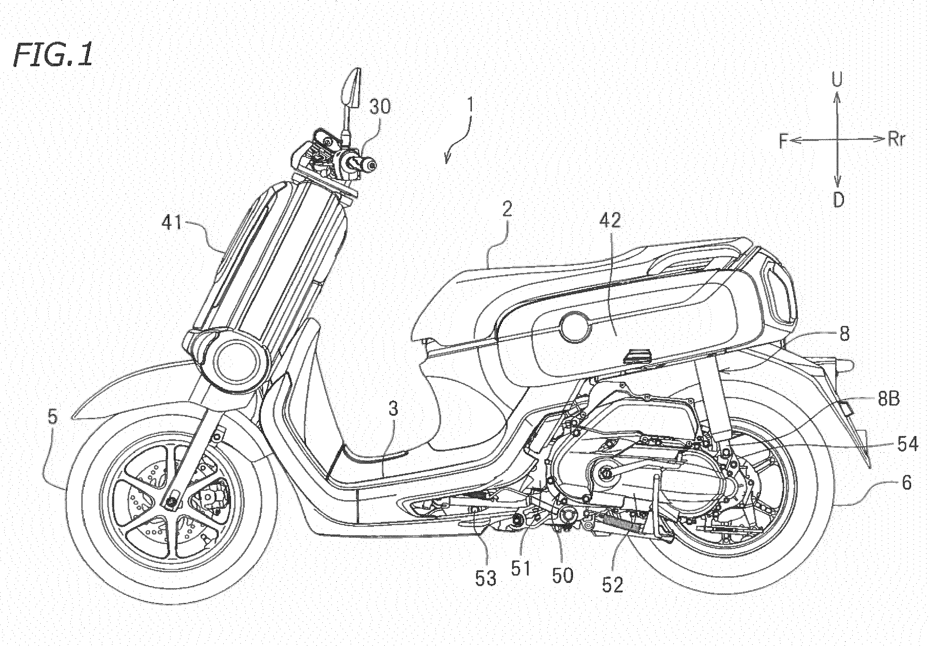

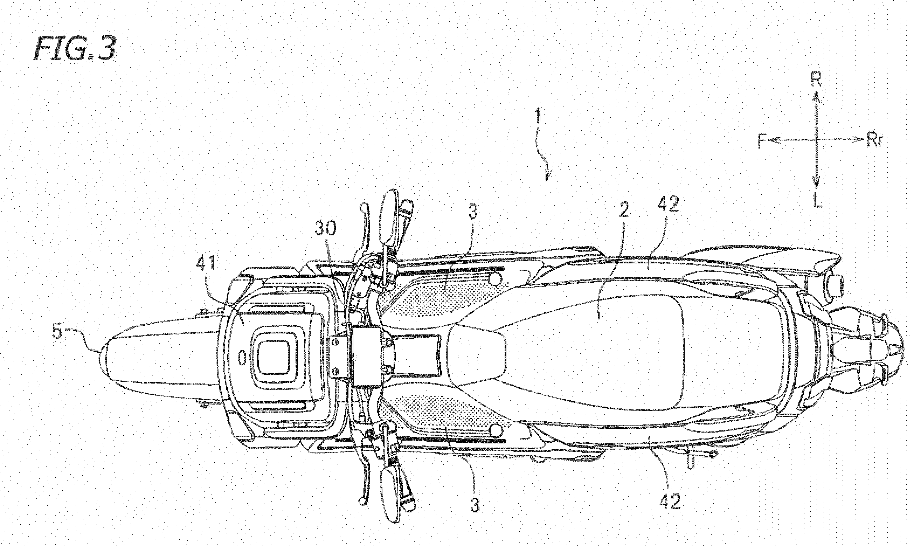

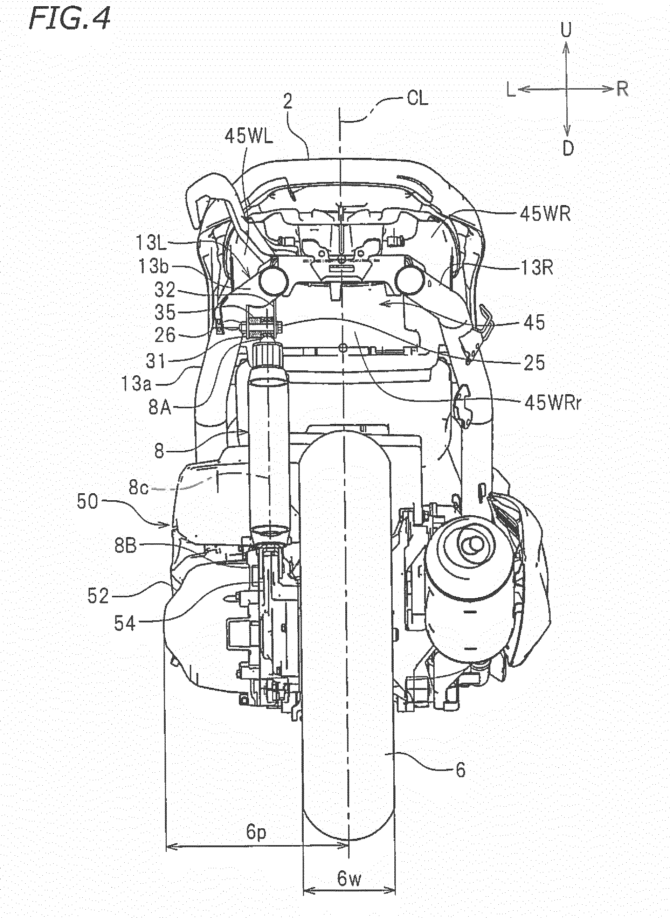

One preferred embodiment will now be described with reference to the drawings. FIG. 1 is a left side view of a motorcycle 1, which is an exemplary straddled vehicle. The motorcycle 1 of the present embodiment is a scooter-type motorcycle. FIG. 2 is a front view of the motorcycle 1, and FIG. 3 is a plan view of the motorcycle 1. FIG. 4 is a back view of a part of the motorcycle 1. The motorcycle 1 is configured so that a rear wheel 6 can be replaced and the position of a rear cushion unit 8 in the vehicle width direction can be changed when the rear wheel 6 is replaced, the details of which will be described below.

The terms front, rear, left, right, up and down, as used in the description below, refer to these directions as seen from a virtual rider seated on a seat 2 when the motorcycle 1 is standing upright on a horizontal surface with no load thereon. The term no load means that the motorcycle 1 has no fuel and has no luggage mounted thereon, with no rider thereon. The designations F, Rr, L, R, U and D, as used in the figures, refer to front, rear, left, right, up and down, respectively.

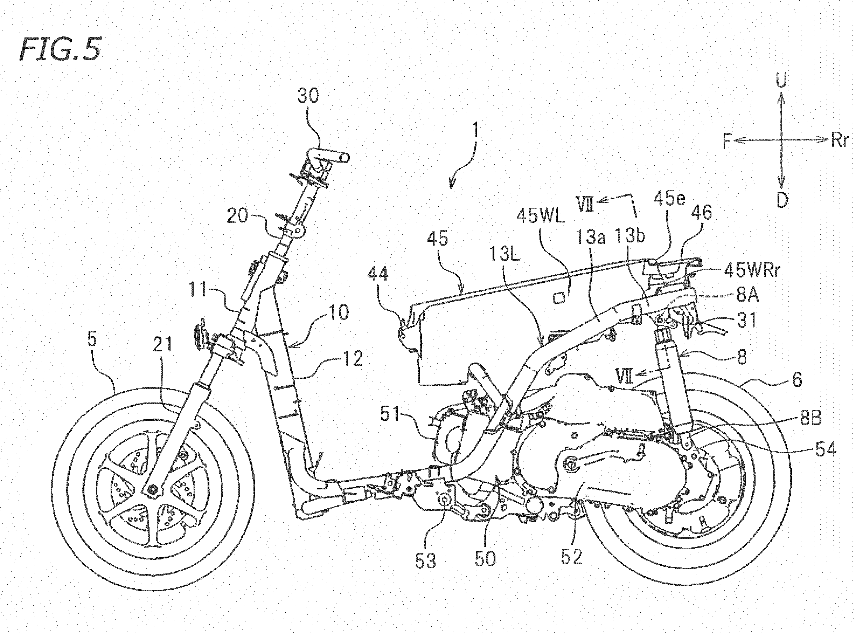

As shown in FIG. 5, the motorcycle 1 includes a body frame 10. The body frame 10 includes a head pipe 11, a down frame 12 extending downward from the head pipe 11 as the vehicle is seen from the side, and the left and right seat frames 13L and 13R (see FIG. 4) extending rearward and upward from the down frame 12 as the vehicle is seen from the side. As shown in FIG. 4, a left seat frame 13L is located leftward of a vehicle center line CL and a right seat frame 13R is located rightward of the vehicle center line CL, as the vehicle is seen from the back. Herein, the vehicle center line CL as the vehicle is seen from the back refers to a vertical line passing through the center of the head pipe 11 as the vehicle is seen from the back when the motorcycle 1 is standing upright on a horizontal surface with no load thereon. Note that as the vehicle is seen from the back, the vehicle center line CL is located at the center of the rear wheel 6 in the vehicle width direction. In the present embodiment, the left seat frame 13L and the right seat frame 13R have a left-right symmetrical shape with respect to the vehicle center line CL. Note however that the present teaching is not limited thereto.

As shown in FIG. 5, a steering shaft 20 is rotatably inserted into the head pipe 11. A handle 30 is supported on an upper portion of the steering shaft 20. A front fork 21 is secured on a lower portion of the steering shaft 20. A front wheel 5 is supported on a lower end portion of the front fork 21. The front wheel 5 is supported on the steering shaft 20 via the front fork 21.

A power unit 50 is pivotally supported on the left seat frame 13L and the right seat frame 13R. A pivot shaft 53 is provided on the left seat frame 13L and the right seat frame 13R. The power unit 50 is pivotally supported on the pivot shaft 53. The power unit 50 includes an internal combustion engine 51, a V-belt continuously variable transmission (not shown), and a transmission case 52 covering the V-belt continuously variable transmission. Note that the power source of the power unit 50 is not limited to the internal combustion engine 51, and it may be an electric motor, for example. The power unit 50 may include a transmission having a plurality of gears, instead of a V-belt continuously variable transmission. The rear wheel 6 is supported on the rear end portion of the power unit 50. The rear wheel 6 is located rightward of the transmission case 52. The rear cushion unit 8 is connected to the left seat frame 13L and the rear wheel 6.

As shown in FIG. 1, the seat 2 is located rearward of the head pipe 11 (not shown in FIG. 1; see FIG. 5). A front cover 41 is located forward of the head pipe 11. A footrest 3 is provided forward of and below the seat 2. A side cover 42 is located below and on the side of the seat 2.

As shown in FIG. 5, a storage box 45 is supported on the left seat frame 13L and the right seat frame 13R. The storage box 45 is formed in a box shape with the top open. For example, a helmet, or the like, can be stored in the storage box 45. Note however that there is no particular limitation on the item or items to be stored in the storage box 45. The storage box 45 includes a left wall 45WL, a right wall 45WR and a rear wall 45WRr.

A seat support member 46 is located rearward of the storage box 45. The seat support member 46 is located rearward of the rear wall 45WRr of the storage box 45. Note that the reference sign 45e in FIG. 5 denotes the rear end of the storage box 45. The seat 2 is located above the storage box 45 and the seat support member 46 (see FIG. 1). The seat support member 46 is a member that supports the load of the seat 2. As opposed to the storage box 45, the seat support member 46 is not a member that stores an item or items therein.

A shaft 44 is provided at the front end portion of the storage box 45. The seat 2 is rotatably supported on the shaft 44. When the seat 2 is located directly above the storage box 45, the top of the storage box 45 is covered by the seat 2. On the other hand, when the seat 2 is rotated forward about the shaft 44, the seat 2 moves forward from the position directly above the storage box 45, thereby opening the top of the storage box 45. This allows an item or items to be put into or out of the storage box 45.

As shown in FIG. 5, the left seat frame 13L includes a first portion 13a that overlaps with the storage box 45 as the vehicle is seen from the side, and a second portion 13b located rearward of the first portion 13a as the vehicle is seen from the side. As the vehicle is seen from the side, the second portion 13b does not overlap with the storage box 45. As the vehicle is seen from the side, the second portion 13b is located rearward of the storage box 45. Although not shown in the figures, the right seat frame 13R also includes a first portion that overlaps with the storage box 45 as the vehicle is seen from the side, and a portion located rearward of the first portion as the vehicle is seen from the side. As shown in FIG. 4, the second portion 13b of the left seat frame 13L overlaps with the storage box 45 as the vehicle is seen from the back.

The left seat frame 13L and the right seat frame 13R are shaped so as to deviate inward in the vehicle width direction while extending rearward. Note that inward in the vehicle width direction means toward the vehicle center line CL, and outward in the vehicle width direction means away from the vehicle center line CL. The left seat frame 13L is shaped so as to deviate rightward while extending rearward. The right seat frame 13R is shaped so as to deviate leftward while extending rearward. The left seat frame 13L and the right seat frame 13R are shaped so as to deviate toward the vehicle center line CL while extending rearward, as the vehicle is seen from the back.

The left wall 45WL of the storage box 45 is shaped so as to deviate rightward while extending rearward. The right wall 45WR is shaped so as to deviate leftward while extending rearward. That is, the left wall 45WL and the right wall 45WR are shaped so as to deviate inward in the vehicle width direction while extending rearward. The storage box 45 is shaped so that the dimension thereof in the vehicle width direction decreases while extending rearward. At least a portion of the left wall 45WL is located rightward of the left seat frame 13L. At least a portion of the right wall 45WR is located leftward of the right seat frame 13R.

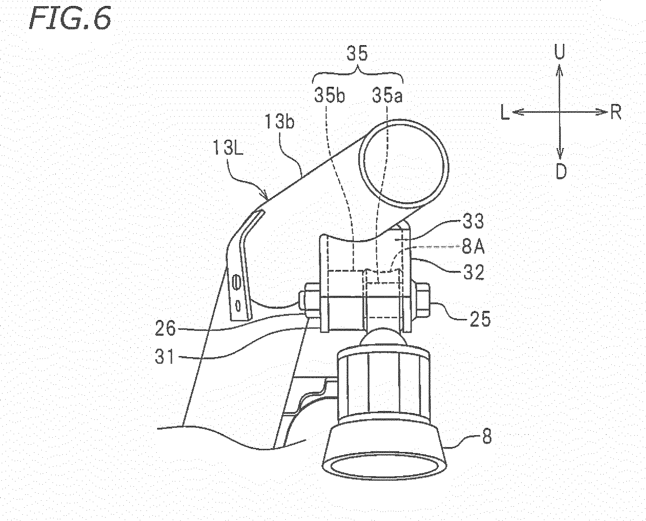

As shown in FIG. 6, a first bracket plate 31 and a second bracket plate 32 are provided on the left seat frame 13L. Bracket plates 33 bridge between the first bracket plate 31 and the second bracket plate 32 in the front portion and the rear portion of the bracket plates 31 and 32. One of the bracket plates 33 is connected to the rear end portion of the first bracket plate 31 and the rear end portion of the second bracket plate 32. Another bracket plate 33 is connected to the front end portion of the first bracket plate 31 and the front end portion of the second bracket plate 32. The bracket plates 33 may be integral with, or separate from, the first bracket plate 31 and the second bracket plate 32. The bracket plates 33 are also provided on the left seat frame 13L. Note that the bracket plates 33 may not always be needed, and may be optional. The second bracket plate 32 is located inward of the first bracket plate 31 in the vehicle width direction. In the present embodiment, the first bracket plate 31 and the second bracket plate 32 are welded to the left seat frame 13L. The first bracket plate 31 and the second bracket plate 32 include a welded portion that is welded to the left seat frame 13L. Note however that there is no limitation on the method for securing the first bracket plate 31 and the second bracket plate 32 on the left seat frame 13L. For example, the first bracket plate 31 and the second bracket plate 32 may be secured on the left seat frame 13L via bolts. As shown in FIG. 4, the first bracket plate 31 and the second bracket plate 32 overlap with the storage box 45 as the vehicle is seen from the back. As shown in FIG. 5, the first bracket plate 31 and the second bracket plate 32 do not overlap with the storage box 45 as the vehicle is seen from the side. As the vehicle is seen from the side, the first bracket plate 31 and the second bracket plate 32 are located rearward of the storage box 45.

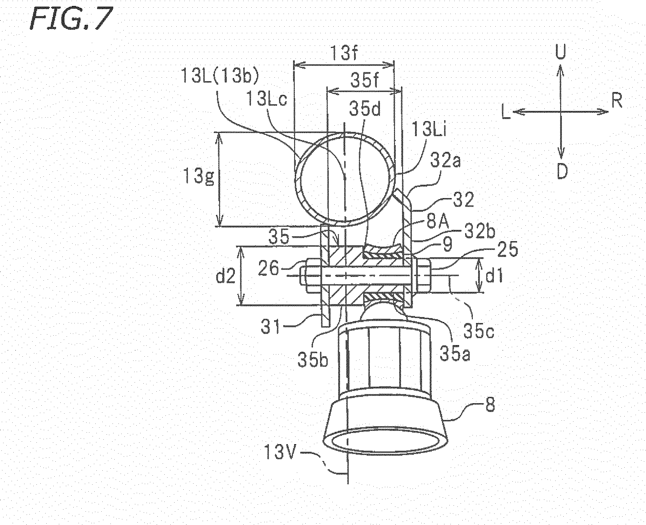

As shown in FIG. 7, the first bracket plate 31 is formed from a flat plate extending vertically downward from the left seat frame 13L. The second bracket plate 32 is formed from a bent plate including a base portion 32a extending inward in the vehicle width direction and downward from the left seat frame 13L, and a main portion 32b extending vertically downward from the base portion 32a. The main portion 32b of the second bracket plate 32 is located parallel to the first bracket plate 31. The main portion 32b of the second bracket plate 32 and the first bracket plate 31 extend in the vehicle front-rear direction and in the vehicle up-down direction. Note however that there is no particular limitation on the shape of the first bracket plate 31 and the second bracket plate 32. For example, the first bracket plate 31 may be formed from a bent plate, and the second bracket plate 32 is formed from a flat plate. The first bracket plate 31 is located outward, in the vehicle width direction, of a center 13Lc of the left seat frame 13L. The second bracket plate 32 is located inward, in the vehicle width direction, of the center 13Lc of the left seat frame 13L. At least a portion of the second bracket plate 32 is located inward, in the vehicle width direction, of an inner end 13Li of the left seat frame 13L in the vehicle width direction. Herein, the main portion 32b of the second bracket plate 32 is located inward, in the vehicle width direction, of the inner end 13Li of the left seat frame 13L in the vehicle width direction.

A collar 35 is placed between the first bracket plate 31 and the second bracket plate 32. The collar 35 is placed between the first bracket plate 31 and the main portion 32b of the second bracket plate 32. The collar 35 is a cylindrical member and is made of a metal in the present embodiment. The collar 35 includes a first cylindrical portion 35a having a first outer diameter d1, and a second cylindrical portion 35b having a second outer diameter d2 greater than the first outer diameter d1. The collar 35 is placed along the vehicle width direction. A center line 35c of the collar 35 extends in the vehicle width direction. The first cylindrical portion 35a and the second cylindrical portion 35b are located so as to be coaxial with each other and are arranged next to each other in the vehicle width direction. A step 35d is formed between the first cylindrical portion 35a and the second cylindrical portion 35b. Herein, the first cylindrical portion 35a is located inward of the second cylindrical portion 35b in the vehicle width direction. The first cylindrical portion 35a is located rightward of the second cylindrical portion 35b.

The first cylindrical portion 35a of the collar 35 is fitted into a rubber-made tubular member 9. The rear cushion unit 8 includes a cylindrical upper support portion 8A. The tubular member 9 and the first cylindrical portion 35a of the collar 35 are fitted into the upper support portion 8A. Thus, the first cylindrical portion 35a of the collar 35 is inserted in the upper support portion 8A, and the tubular member 9 is interposed between the upper support portion 8A and the first cylindrical portion 35a. The upper support portion 8A is supported on the collar 35 so that it can pivot about the center line 35c of the collar 35. The step 35d of the collar 35 is located on the side of the tubular member 9 and the upper support portion 8A. The step 35d restricts the movement of the tubular member 9 and the upper support portion 8A from over the first cylindrical portion 35a to over the second cylindrical portion 35b. The upper support portion 8A is supported on the collar 35 so that the upper support portion 8A cannot move in the vehicle width direction. The inner diameter of the upper support portion 8A is greater than the outer diameter d1 of the first cylindrical portion 35a. The inner diameter of the upper support portion 8A is less than the outer diameter d2 of the second cylindrical portion 35b. As shown in FIG. 7, in a vertical cross section that includes the center line 35c of the collar 35, the upper support portion 8A of the rear cushion unit 8 is placed inward, in the vehicle width direction, of a vertical line 13V passing through the center 13Lc of the left seat frame 13L.

The collar 35 is secured on the first bracket plate 31 and the second bracket plate 32 via a bolt 25 and a nut 26. The upper support portion 8A of the rear cushion unit 8 is secured on the first bracket plate 31 and the second bracket plate 32 via the collar 35, the bolt 25 and the nut 26. Thus, the upper support portion 8A of the rear cushion unit 8 is supported on the left seat frame 13L.

As described above, the second portion 13b of the left seat frame 13L is formed so as to deviate inward in the vehicle width direction while extending rearward. As shown in FIG. 7, in the vertical cross section that includes the center line 35c of the collar 35, the outline of the second portion 13b of the left seat frame 13L has an elliptical shape. In the vertical cross section, a dimension 13f of the left seat frame 13L in the vehicle width direction is greater than a dimension 13g thereof in the up-down direction. As shown in FIG. 7, in the vertical cross section that includes the center line 35c of the collar 35, a dimension 35f of the collar 35 along the center line 35c is greater than or equal to 1/2 the dimension 13f of the left seat frame 13L in a direction parallel to the center line 35c. The collar 35 is larger than the dimension of the rear cushion unit 8 in the direction parallel to the center line 35c of the upper support portion 8A. In the vertical cross section that includes the center line 35c of the collar 35, the distance between the vertical line 13V passing through the center 13Lc of the left seat frame 13L and the first bracket plate 31 is less than the distance between the vertical line 13V and the second bracket plate 32.

As shown in FIG. 5, the power unit 50 includes a bracket 54 connected to the transmission case 52. A lower support portion 8B of the rear cushion unit 8 is pivotally supported on the bracket 54. Note that the portion of the power unit 50 on which the lower support portion 8B of the rear cushion unit 8 is supported is not limited to the bracket 54. For example, the lower support portion 8B may be supported on the transmission case 52. There is no limitation on the portion on which the lower support portion 8B is supported. As shown in FIG. 4, the rear cushion unit 8 is placed so that a center line 8c of the rear cushion unit 8 is parallel to the vehicle center line CL as the vehicle is seen from the back. That is, the rear cushion unit 8 is placed along the vertical line.

The configuration of the motorcycle 1 is as described above. In the motorcycle 1, the rear wheel 6 can be replaced. Next, a configuration of the motorcycle 1 when the rear wheel 6 is replaced with a wider rear wheel 7 will be described.

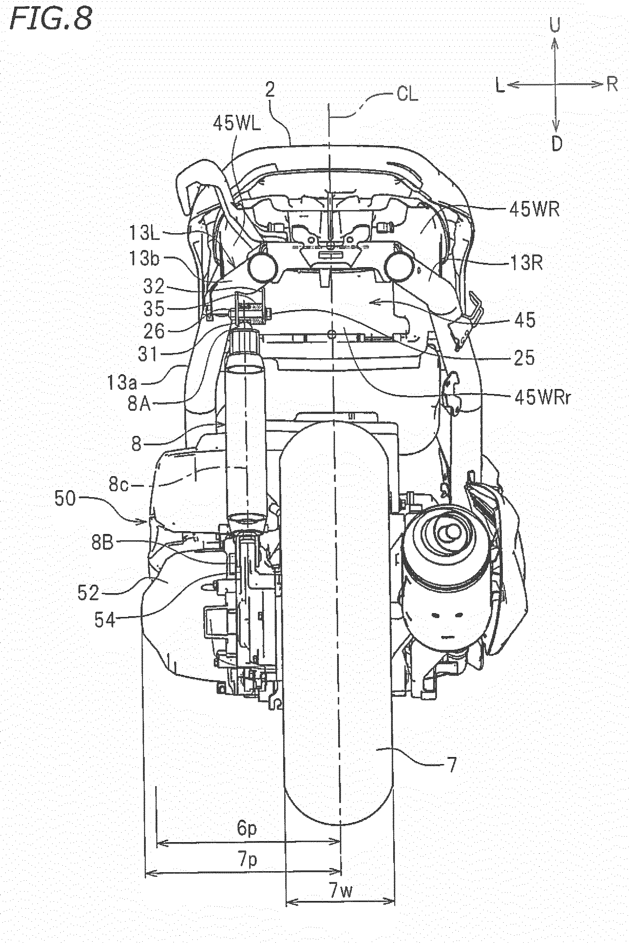

FIG. 8, FIG. 9 and FIG. 10 correspond to FIG. 4, FIG. 6 and FIG. 7, respectively, where the rear wheel 6 is replaced with the rear wheel 7. As shown in FIG. 4 and FIG. 8, a width 7w of the rear wheel 7 is greater than a width 6w of the rear wheel 6. 7w>6w. In FIG. 4 and FIG. 8, the reference signs 6p and 7p each denote the distance between the outermost end of the power unit 50 in the vehicle width direction and the vehicle center line CL as the vehicle is seen from the back. That is, the reference signs 6p and 7p each denote the distance between the left end of the power unit 50 and the vehicle center line CL as the vehicle is seen from the back. Herein, 7p>6p. When a wider rear wheel 7 is installed, the outermost end of the power unit 50 in the vehicle width direction is located further away from the vehicle center line CL as compared with a case in which the rear wheel 6 is installed. In the present embodiment, when the wider rear wheel 7 is installed, the left end of the power unit 50 is located more leftward as compared with a case in which the rear wheel 6 is installed. When the rear wheel 6 is replaced with the rear wheel 7, the position of the power unit 50 is shifted leftward by Δp=7p-6p. As a result, the position of the lower support portion 8B of the rear cushion unit 8 is shifted leftward by Δp.

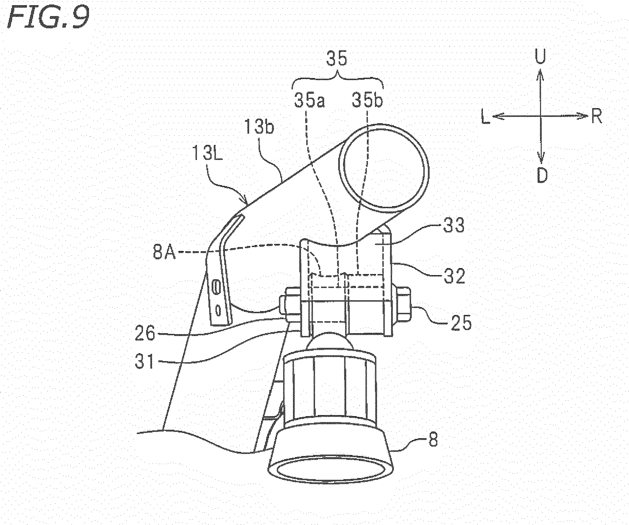

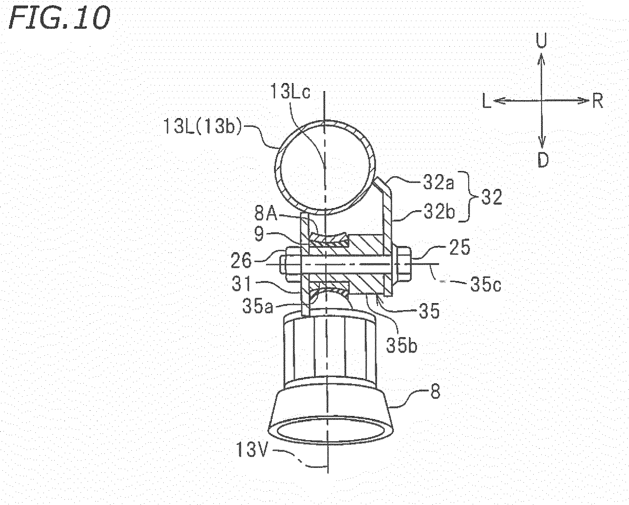

In view of this, when the rear wheel 6 is replaced with the rear wheel 7, the orientation of the collar 35 is reversed, thereby shifting leftward the position of the upper support portion 8A of the rear cushion unit 8. Specifically, as shown in FIG. 9 and FIG. 10, when the rear wheel 7 is installed, the collar 35 is placed between the first bracket plate 31 and the second bracket plate 32 so that the first cylindrical portion 35a is located outward of the second cylindrical portion 35b in the vehicle width direction. Then, the position of the upper support portion 8A of the rear cushion unit 8 is shifted outward in the vehicle width direction. That is, the position of the upper support portion 8A of the rear cushion unit 8 is shifted leftward. The present embodiment is configured so that by changing the orientation of the collar 35, the position of the upper support portion 8A is shifted leftward by Δp. Thus, even when the wider rear wheel 7 is installed, the rear cushion unit 8 can be placed so that the center line 8c is parallel to the vehicle center line CL as the vehicle is seen from the back. That is, the rear cushion unit 8 can be placed along the vertical line.

Note that as shown in FIG. 10, when the wider rear wheel 7 is installed, the upper support portion 8A is placed on the vertical line 13V passing through the center 13Lc of the left seat frame 13L, in the vertical cross section that includes the center line 35c of the collar 35. In this vertical cross section, the upper support portion 8A crosses the vertical line 13V. Thus, the upward load received by the rear cushion unit 8 is likely to be transmitted from the upper support portion 8A toward the center 13Lc of the left seat frame 13L.

Note that when the rear wheel 6 is replaced with the rear wheel 7, the bolt 25 is removed from the nut 26. Next, the collar 35 is removed from between the first bracket plate 31 and the second bracket plate 32. Then, the collar 35 is removed from the upper support portion 8A of the rear cushion unit 8. After the rear wheel 6 is replaced with the rear wheel 7, the orientation of the collar 35 is reversed, and the collar 35 is inserted into the upper support portion 8A of the rear cushion unit 8. That is, the orientation of the collar 35 is changed so that the first cylindrical portion 35a is located outward of the second cylindrical portion 35b in the vehicle width direction, and the first cylindrical portion 35a is inserted into the upper support portion 8A. Note that in this process, the rubber-made tubular member 9 may be left on or may be replaced. Then, the collar 35 is secured on the first bracket plate 31 and the second bracket plate 32 via the bolt 25 and the nut 26. Thus, together with the replacement of the rear wheel 7, it is possible to easily change the position of the rear cushion unit 8 in the vehicle width direction.

As described above, with the motorcycle 1 of the present embodiment, by changing the orientation of the collar 35 placed between the first bracket plate 31 and the second bracket plate 32, it is possible to easily change the position of the rear cushion unit 8 in the vehicle width direction. Therefore, as shown in FIG. 4, when the relatively narrow rear wheel 6 is installed, the rear cushion unit 8 can be placed relatively inward in the vehicle width direction. As shown in FIG. 8, when the relatively wide rear wheel 7 is installed, the rear cushion unit 8 can be placed relatively outward in the vehicle width direction. Therefore, the rear wheels 6 and 7 of different widths can easily be switched from one to another.

When the wider rear wheel 7 is installed, as shown in FIG. 10, the collar 35 is placed so that the first cylindrical portion 35a is located outward of the second cylindrical portion 35b in the vehicle width direction. With the motorcycle 1, when the wider rear wheel 7 is installed, the upper support portion 8A of the rear cushion unit 8 is located on the vertical line 13V passing through the center 13Lc of the left seat frame 13L. Therefore, the load to be transmitted from the rear cushion unit 8 to the left seat frame 13L is transmitted in a direction perpendicular to the left seat frame 13L. Thus, without changing the shape of the left seat frame 13L, the left seat frame 13L can effectively receive the load from the rear cushion unit 8. Therefore, there is no need to change the shape of the left seat frame 13L in order to increase the rigidity. There is no need to change the body frame 10 and the bracket plates 31 and 32, making it easy to switch between the rear wheels 6 and 7 having different widths.

With the motorcycle 1, when the relatively narrow rear wheel 6 is installed, the rear cushion unit 8 is placed closer to the center in the vehicle width direction. Therefore, when the relatively narrow rear wheel 6 is installed, the dimension in the vehicle width direction can be reduced.

With the motorcycle 1, when the wider rear wheel 7 is installed, the load to be received from the road surface tends to increase. As compared with a case in which the narrower rear wheel 6 is installed, the load to be received by the rear cushion unit 8 tends to increase. With the motorcycle 1 of the present embodiment, as shown in FIG. 10, the upper support portion 8A of the rear cushion unit 8 is placed on the vertical line 13V passing through the center 13Lc of the left seat frame 13L, in the vertical cross section that includes the center line 35c of the collar 35. Therefore, the load applied to the rear cushion unit 8 is likely to be supported by the left seat frame 13L in a well-balanced manner. Even if the load applied from the road surface to the rear cushion unit 8 via the rear wheel 7 and the power unit 50 is relatively large, the rear cushion unit 8 can be sufficiently supported by the left seat frame 13L.

In the present embodiment, the first bracket plate 31 is a flat plate extending vertically downward from the left seat frame 13L. The second bracket plate 32 is a bent plate including the base portion 32a extending inward in the vehicle width direction and downward from the left seat frame 13L, and the main portion 32b extending vertically downward from the base portion 32a. With such a configuration, it is possible to ensure the dimension between the first bracket plate 31 and the second bracket plate 32 while ensuring the strength with which the first bracket plate 31 and the second bracket plate 32 are attached to the left seat frame 13L.

In the present embodiment, in the vertical cross section that includes the center line 35c of the collar 35, the dimension 35f of the collar 35 in a direction along the center line 35c is greater than or equal to 1/2 the dimension 13f of the left seat frame 13L in the direction parallel to the center line 35c. Since the collar 35 has a large dimension as described above, the position of the first cylindrical portion 35a can be changed by a large amount when the orientation of the collar 35 is changed. Thus, it is possible to realize a large amount of change in the position of the rear cushion unit 8 in the vehicle width direction. It is possible to increase the difference in width between the rear wheels 6 and 7 that can be switched from one to another.

In the present embodiment, in the vertical cross section that includes the center line 35c of the collar 35, the distance between the vertical line 13V passing through the center 13Lc of the left seat frame 13L and the first bracket plate 31 is smaller than the distance between the vertical line 13V and the second bracket plate 32. The middle position between the first bracket plate 31 and the second bracket plate 32 is located inward, in the vehicle width direction, of the center 13Lc of the left seat frame 13L. Therefore, the rear cushion unit 8 can be placed close to the center in the vehicle width direction.

According to the present embodiment, in the vertical cross section that includes the center line 35c of the collar 35, the outline of the left seat frame 13L is formed in an elliptical shape whose dimension 13f in the vehicle width direction is greater than the dimension 13g in the up-down direction. Thus, the rear cushion unit 8 can be sufficiently supported by the left seat frame 13L.

According to the present embodiment, the second bracket plate 32 overlaps with the storage box 45 as the vehicle is seen from the back. The second bracket plate 32 is located close to the center in the vehicle width direction. The first bracket plate 31 overlaps with the storage box 45 as the vehicle is seen from the back. The first bracket plate 31 is located close to the center in the vehicle width direction. Therefore, the collar 35 can be placed close to the center in the vehicle width direction. Thus, the rear cushion unit 8 can be placed close to the center in the vehicle width direction.

According to the present embodiment, the collar 35 is made of a metal. Since the collar 35 has a high rigidity, the upper support portion 8A of the rear cushion unit 8 can be supported rigidly. On the other hand, the rubber-made tubular member 9 is interposed between the upper support portion 8A of the rear cushion unit 8 and the collar 35. Therefore, when the power unit 50 pivots, the upper support portion 8A of the rear cushion unit 8 smoothly pivots on the collar 35. Also, the friction against the collar 35 is reduced.

According to a method for assembling the motorcycle 1 of the present embodiment, when the rear wheel 6 having the width 6w is used, the collar 35 is placed between the first bracket plate 31 and the second bracket plate 32 so that the first cylindrical portion 35a is located inward of the second cylindrical portion 35b in the vehicle width direction. On the other hand, when the rear wheel 7 having the width 7w greater than the width 6w is used, the collar 35 is placed between the first bracket plate 31 and the second bracket plate 32 so that the first cylindrical portion 35a is located outward of the second cylindrical portion 35b in the vehicle width direction. With such an assembly method, the rear wheel 6 can easily be replaced with the rear wheel 7, and the rear wheel 7 can easily be replaced with the rear wheel 6.

A preferred embodiment has been described above. However, the embodiment is merely an example, and it is understood that the present teaching is not limited to this embodiment. The present teaching can be carried out in various other embodiments.

While the rear cushion unit 8 is placed leftward of the rear wheel 6, 7 in the embodiment described above, it may be placed rightward of the rear wheel 6, 7. That is, the first bracket plate 31 and the second bracket plate 32 can be provided on the right seat frame 13R. The collar 35 may be placed between the first bracket plate 31 and the second bracket plate 32, and the upper support portion 8A may be supported on the first cylindrical portion 35a of the collar 35, thus placing the upper support portion 8A rightward of the rear wheel 6, 7. A part of the power unit 50 may be placed rightward of the rear wheel 6, 7 and the lower support portion 8B may be pivotally supported on this part of the power unit 50, thus placing the lower support portion 8B rightward of the rear wheel 6, 7.

In the embodiment described above, the seat frames 13L and 13R are formed from hollow pipes. However, the seat frames 13L and 13R may be formed from solid bars. The outline of the cross section of the seat frames 13L and 13R is not limited to a circular shape but may be any other shape such as an elliptical shape.

The straddled vehicle of the embodiment described above is a scooter-type motorcycle. However, the straddled vehicle refers to a vehicle to be straddled by a passenger, and there is no particular limitation on the form thereof. The straddled vehicle may be a motorcycle of a form other than a scooter, or may be a vehicle other than a motorcycle. The straddled vehicle is a vehicle whose body is inclined from the vertical line when turning, for example, but the number of wheels is not limited to two. The straddled vehicle may be a vehicle whose number of wheels is three or more. The straddled vehicle may be a three-wheeled vehicle having two front wheels.

### REFERENCE SIGNS LIST

1: Motorcycle, 5: Front wheel, 6: Rear wheel (first rear wheel), 7: Rear wheel (second rear wheel), 8: Rear cushion unit, 8A: Upper support portion, 8B: Lower support portion, 9: Tubular member, 10: Body frame, 11: Head pipe, 12: Down frame, 13L: Left seat frame (seat frame), 13a: First portion of left seat frame, 13b: Second portion of left seat frame, 31: First bracket plate, 32: Second bracket plate, 32a: Base portion, 32b: Main portion, 35: Collar, 35a: First cylindrical portion, 35b: Second cylindrical portion, 45: Storage box, 50: Power unit, CL: Vehicle center line

## Claims

1. A straddled vehicle comprising:
a body frame (10) including a head pipe (11), a down frame (12) extending downward from the head pipe (11) as the vehicle is seen from the side, and a seat frame (13L, 13R) extending rearward and upward from the down frame (12) as the vehicle is seen from the side;
a storage box (45) supported on the seat frame (13L, 13R);
a power unit (50) pivotally supported on the seat frame (13L, 13R);
a rear wheel (6, 7) supported on the power unit (50);
wherein the seat frame (13L, 13R) includes a first portion (13a) that overlaps with the storage box (45) as the vehicle is seen from the side, and a second portion (13b) that is located rearward of the first portion (13a) as the vehicle is seen from the side and that overlaps with the storage box (45) as the vehicle is seen from the back,
the straddled vehicle further comprising,
a first bracket plate (31) provided on the second portion (13b) of the seat frame (13L, 13R);
a second bracket plate (32) provided on the second portion (13b) of the seat frame (13L, 13R) and located inward of the first bracket plate (31) in a vehicle width direction;
a collar (35) placed between the first bracket plate (31) and the second bracket plate (32),
**characterized by** the collar (35) including a first cylindrical portion (35a) having a first outer diameter (d1) and a second cylindrical portion (35b) having a second outer diameter (d2) greater than the first outer diameter (d1); and
a rear cushion unit (8) including a cylindrical upper support portion (8A) into which the first cylindrical portion (35a) of the collar (35) is inserted and which is pivotally supported on the first cylindrical portion (35a), and a lower support portion (8B) pivotally supported on the power unit (50), wherein
the first bracket plate (31) is located outward, in the vehicle width direction, of a center (13Lc) of the seat frame (13L, 13R) in a vertical cross section that includes a center line (35c) of the collar (35);
at least a portion of the second bracket plate (32) is located inward, in the vehicle width direction, of an inner end of the seat frame (13L, 13R) in the vehicle width direction in the vertical cross section that includes the center line (35c) of the collar the collar (35) is formed so that the first cylindrical portion (35a) is located on a vertical line (13V) that passes through the center (13Lc) of the seat frame (13L, 13R) in the vertical cross section that includes the center line (35c) of the collar (35) when the collar (35) is placed so that the first cylindrical portion (35a) is located outward of the second cylindrical portion (35b) in the vehicle width direction between the first bracket plate (31) and the second bracket plate (32).

2. A straddled vehicle according to claim 1, wherein the first cylindrical portion (35a) is located outward of the second cylindrical portion (35b) in the vehicle width direction; and
in the vertical cross section that includes the center line (35c) of the collar (35), the upper support portion (8A) of the rear cushion unit (8) is placed on the vertical line (13V) that passes through the center (13Lc) of the seat frame (13L, 13R).

3. A straddled vehicle according to claim 1, wherein the first cylindrical portion (35a) is located inward of the second cylindrical portion (35b) in the vehicle width direction; and
in the vertical cross section that includes the center line (35c) of the collar (35), the upper support portion (8A) of the rear cushion unit (8) is placed inward, in the vehicle width direction, of the vertical line (13V) that passes through the center (13Lc) of the seat frame (13L, 13R).

4. A straddled vehicle according to any one of claims 1 to 3, wherein the first bracket plate (31) is a flat plate extending vertically downward from the seat frame (13L, 13R); and
the second bracket plate (32) is a bent plate including a base portion (32a) extending inward in the vehicle width direction and downward from the seat frame (13L, 13R), and a main portion (32b) extending vertically downward from the base portion (32a).

5. A straddled vehicle according to any one of claims 1 to 4, wherein in the vertical cross section that includes the center line (35c) of the collar (35), a dimension (35f) of the collar (35) in a direction along the center line (35c) of the collar (35) is greater than or equal to 1/2 a dimension (13f) of the seat frame (13L, 13R) in a direction parallel to the center line (35c) of the collar (35).

6. A straddled vehicle according to any one of claims 1 to 5, wherein on the center line (35c) of the collar (35), a distance between the vertical line (13V) that passes through the center (13Lc) of the seat frame (13L, 13R) and the first bracket plate (31) is less than a distance between the vertical line (13V) that passes through the center (13Lc) of the seat frame (13L, 13R) and the second bracket plate (32).

7. A straddled vehicle according to any one of claims 1 to 6, wherein an outline of the seat frame (13L, 13R) in the vertical cross section that includes the center line (35c) of the collar (35) is formed in an elliptical shape whose dimension (13f) in the vehicle width direction is greater than a dimension (13g) thereof in an up-down direction.

8. A straddled vehicle according to any one of claims 1 to 7, wherein the second bracket plate (32) overlaps with the storage box (45) as the vehicle is seen from the back.

9. A straddled vehicle according to any one of claims 1 to 7, wherein the first bracket plate (31) and the second bracket plate (32) overlap with the storage box (45) as the vehicle is seen from the back.

10. A straddled vehicle according to any one of claims 1 to 9, wherein the collar (35) is made of a metal; and
the straddled vehicle includes a rubber-made tubular member (9) interposed between the upper support portion (8A) of the rear cushion unit (8) and the collar (35).

11. A method for assembling the straddled vehicle according to any one of claims 1 to 10, wherein when a first rear wheel (6) having a first width (6w) is used as the rear wheel, the collar (35) is placed between the first bracket plate (31) and the second bracket plate (32) so that the first cylindrical portion (35a) is located inward of the second cylindrical portion (35b) in the vehicle width direction; and
when a second rear wheel (7) having a second width (7w) greater than the first width (6w) is used as the rear wheel, the collar (35) is placed between the first bracket plate (31) and the second bracket plate (32) so that the first cylindrical portion (35a) is located outward of the second cylindrical portion (35b) in the vehicle width direction.

## Patentansprüche

1. Ein Spreiz-Sitz-Fahrzeug, das umfasst:
einen Körper-Rahmen (10), der ein Kopf-Rohr (11), einen Unter-Rahmen (12), der sich nach unten von dem Kopf-Rohr (11) erstreckt, wenn das Fahrzeug von der Seite gesehen ist, und einen Sitz-Rahmen (13L, 13R), der sich nach hinten und oben von dem Unter-Rahmen (12) erstreckt, wenn das Fahrzeug von der Seite gesehen ist, beinhaltet;
einen Lager-Kasten (45), der an dem Sitz-Rahmen (13L, 13R) gelagert ist;
eine Leistungs-Einheit (50), die schwenkbar an dem Sitz-Rahmen (13L, 13R) gelagert ist;
ein Hinter-Rad (6, 7), das an der Leistungs-Einheit (50) gelagert ist;
wobei der Sitz-Rahmen (13L, 13R) einen ersten Abschnitt (13a), der mit dem Lager-Kasten (45) überlappt, wenn das Fahrzeug von der Seite gesehen ist, und einen zweiten Abschnitt (13b), der hinter dem ersten Abschnitt (13a) angeordnet ist, wenn das Fahrzeug von der Seite gesehen ist, und der mit dem Lager-Kasten (45) überlappt, wenn das Fahrzeug von hinten gesehen ist, beinhaltet,
das Spreiz-Sitz-Fahrzeug umfasst weiterhin,
eine erste Klammer-Platte (31), die an dem zweiten Abschnitt (13b) des Sitz-Rahmens (13L, 13R) vorgesehen ist;
eine zweite Klammer-Platte (32), die an dem zweiten Abschnitt (13b) des Sitz-Rahmens (13L, 13R) vorgesehen ist, und innerhalb von der ersten Klammer-Platte (31) angeordnet ist in einer Fahrzeug-Breiten-Richtung;
eine Hülse (35), die zwischen der ersten Klammer-Platte (31) und der zweiten Klammer-Platte (32) platziert ist, **gekennzeichnet durch** die Hülse (35), die einen ersten zylindrischen Abschnitt (35a), der einen ersten Außen-Durchmesser (d1) hat, und einen zweiten zylindrischen Abschnitt (35b), der einen zweiten Außen-Durchmesser (d2), größer als den ersten Außen-Durchmesser (d1) hat, beinhaltet; und
eine hintere Dämpfungs-Einheit (8), die einen zylindrischen oberen Lager-Abschnitt (8A), in den der erste zylindrische Abschnitt (35a) der Hülse (35) eingesetzt ist, und die schwenkbar an dem ersten zylindrischen Abschnitt (35a) gelagert ist, und einen unteren Lager-Abschnitt (8B), der an der Leistungs-Einheit (50) schwenkbar gelagert ist, beinhaltet, wobei
die erste Klammer-Platte (31) außerhalb, in der Fahrzeug-Breiten-Richtung, von einer Mitte (13Lc) des Sitz-Rahmens (13L, 13R) in einem Vertikal-Querschnitt, der eine Mittel-Linie (35c) der Hülse (35) beinhaltet, angeordnet ist;
zumindest ein Abschnitt von der zweiten Klammer-Platte (32) ist innerhalb, in der Fahrzeug-Breiten-Richtung, von einem inneren Ende des Sitz-Rahmens (13L, 13R), in der Fahrzeug-Breiten-Richtung, in dem Vertikal-Querschnitt, der die Mittel-Linie (35c) von der Hülse (35) beinhaltet, angeordnet,
die Hülse (35) ist ausgebildet, so dass der erste zylindrische Abschnitt (35a) an einer Vertikal-Linie (13V) angeordnet ist, die durch die Mitte (13Lc) des Sitz-Rahmens (13L, 13R) hindurchtritt, in dem Vertikal-Querschnitt, der die Mittel-Linie (35c) der Hülse (35) beinhaltet, wenn die Hülse (35) platziert ist, so dass der erste zylindrische Abschnitt (35a) außerhalb von dem zweiten zylindrischen Abschnitt (35b), in der Fahrzeug-Breiten-Richtung, zwischen der ersten Klammer-Platte (31) und der zweiten Klammer-Platte (32) angeordnet ist.

2. Ein Spreiz-Sitz-Fahrzeug gemäß Anspruch 1, wobei der erste zylindrische Abschnitt (35a) außerhalb von dem zweiten zylindrischen Abschnitt (35b), in der Fahrzeug-Breiten-Richtung, angeordnet ist; und
in dem Vertikal-Querschnitt, der die Mittel-Linie (35c) der Hülse (35) beinhaltet, ist der obere Lager-Abschnitt (8A) der hinteren Dämpfungs-Einheit (8) an der Vertikal-Linie (13V) platziert, die durch die Mitte (13Lc) des Sitz-Rahmens (13L, 13R) hindurchtritt.

3. Ein Spreiz-Sitz-Fahrzeug gemäß Anspruch 1, wobei der erste zylindrische Abschnitt (35a) innerhalb von dem zweiten zylindrischen Abschnitt (35b), in der Fahrzeug-Breiten-Richtung, angeordnet ist; und
in dem Vertikal-Querschnitt, der die Mittel-Linie (35c) der Hülse (35) beinhaltet, ist der obere Lager-Abschnitt (8A) der hinteren Dämpfungs-Einheit (8), in der Fahrzeug-Breiten-Richtung, innerhalb von der Vertikal-Linie (13V) platziert, die durch die Mitte (13Lc) des Sitz-Rahmens (13L, 13R) hindurchtritt.

4. Ein Spreiz-Sitz-Fahrzeug gemäß zu irgendeinem der Ansprüche 1 bis 3, wobei die erste Klammer-Platte (31) eine flache Platte ist, die sich vertikal nach unten von dem Sitz-Rahmen (13L, 13R) erstreckt; und
die zweite Klammer-Platte (32) ist eine gebogene Platte, die einen Basis-Abschnitt (32a), der sich nach innen, in der Fahrzeug-Breiten-Richtung, und nach unten von dem Sitz-Rahmen (13L, 13R) erstreckt, und einen Haupt-Abschnitt (32b), der sich vertikal nach unten von dem Basis-Abschnitt (32a) erstreckt, beinhaltet.

5. Ein Spreiz-Sitz-Fahrzeug gemäß zu irgendeinem der Ansprüche 1 bis 4, wobei in dem Vertikal-Querschnitt, der die Mittel-Linie (35c) der Hülse (35) beinhaltet, eine Abmessung (35f) der Hülse (35) in einer Richtung entlang der Mittel-Linie (35c) der Hülse (35) größer als oder gleich zu 1/2 einer Abmessung (13f) des Sitz-Rahmens (13L, 13R) in einer Richtung parallel zu der Mittel-Linie (35c) der Hülse (35) ist.

6. Ein Spreiz-Sitz-Fahrzeug gemäß zu irgendeinem der Ansprüche 1 bis 5, wobei auf der Mittel-Linie (35c) der Hülse (35) ein Abstand zwischen der Vertikal-Linie (13V), die durch die Mitte (13Lc) des Sitz-Rahmens (13L, 13R) hindurchtritt, und der ersten Klammer-Platte (31) weniger als ein Abstand zwischen der Vertikal-Linie (13V), die durch die Mitte (13Lc) des Sitz-Rahmens (13L, 13R) hindurchtritt, und der zweiten Klammer-Platte (32) ist.

7. Ein Spreiz-Sitz-Fahrzeug gemäß zu irgendeinem der Ansprüche 1 bis 6, wobei eine Außen-Linie des Sitz-Rahmens (13L, 13R) in dem Vertikal-Querschnitt, der die Mittel-Linie (35c) der Hülse (35) beinhaltet, in einer elliptischen Form ausgebildet ist, deren Abmessung (13f) in der Fahrzeug-Breiten-Richtung größer als eine Abmessung (13g) derselben in der Oben-Unten-Richtung ist.

8. Ein Spreiz-Sitz-Fahrzeug gemäß zu irgendeinem der Ansprüche 1 bis 7, wobei die zweite Klammer-Platte (32) mit dem Lager-Kasten (45) überlappt, wenn das Fahrzeug von hinten gesehen ist.

9. Ein Spreiz-Sitz-Fahrzeug gemäß zu irgendeinem der Ansprüche 1 bis 7, wobei die erste Klammer-Platte (31) und die zweite Klammer-Platte (32) mit dem Lager-Kasten (45) überlappen, wenn das Fahrzeug von hinten gesehen ist.

10. Ein Spreiz-Sitz-Fahrzeug gemäß zu irgendeinem der Ansprüche 1 bis 9, wobei die Hülse (35) aus einem Metall gemacht ist; und
das Spreiz-Sitz-Fahrzeug ein Rohr-Element (9) beinhaltet, das aus Gummi gemacht ist, zwischengesetzt zwischen dem oberen Lager-Abschnitt (8A) der hinteren Dämpfungs-Einheit (8) und der Hülse (35).

11. Ein Verfahren zum Zusammenbau des Spreiz-Sitz-Fahrzeugs gemäß zu irgendeinem der Ansprüche 1 bis 10, wobei, wenn ein erstes Hinter-Rad (6), das eine erste Breite (6w) hat als das Hinter-Rad verwendet ist, ist die Hülse (35) zwischen der ersten Klammer-Platte (31) und der zweiten Klammer-Platte (32) platziert, so dass der erste zylindrische Abschnitt (35a) innerhalb von dem zweiten zylindrischen Abschnitt (35b), in der Fahrzeug-Breiten-Richtung, angeordnet ist; und
wenn ein zweites Hinter-Rad (7), das eine zweite Breite (7w), größer als die erste Breite (6w), hat, als das Hinter-Rad verwendet ist, ist die Hülse (35) zwischen der ersten Klammer-Platte (31) und der zweiten Klammer-Platte (32) platziert, so dass der erste zylindrische Abschnitt (35a) außerhalb von dem zweiten zylindrischen Abschnitt (35b), in der Fahrzeug-Breiten-Richtung, angeordnet ist.

## Revendications

1. Véhicule à enfourcher comprenant :
un corps de châssis (10) comprenant un tube de tête (11), un châssis inférieur (12) qui s'étend vers le bas depuis le tube de tête (11) lorsque le véhicule est vu de côté, et un châssis de siège (13L, 13R) qui s'étend vers l'arrière et vers le haut depuis le châssis inférieur (12) lorsque le véhicule est vu de côté ;
un coffre de rangement (45) supporté par le châssis de siège (13L, 13R) ;
un groupe moteur (50) supporté de manière pivotante par le châssis de siège (13L, 13R) ;
une roue arrière (6, 7) supportée par le groupe moteur (50) ;
dans lequel le châssis de siège (13L, 13R) comprend une première portion (13a) qui se chevauche avec le coffre de rangement (45) lorsque le véhicule est vu de côté, et une deuxième portion (13b) qui est située à l'arrière de la première portion (13a) lorsque le véhicule est vu de côté et qui se chevauche avec le coffre de rangement (45) lorsque le véhicule est vu de l'arrière,
le véhicule à enfourcher comprenant en outre,
une première plaque de support (31) pourvue sur la deuxième portion (13b) du châssis de siège (13L, 13R) ;
une deuxième plaque de support (32) pourvue sur la deuxième portion (13b) du châssis de siège (13L, 13R) et située vers l'intérieur de la première plaque de support (31) en direction de la largeur du véhicule ;
une bague (35) placée entre la première plaque de support (31) et la deuxième plaque de support (32),
**caractérisé en ce que**
la bague (35) comprend une première portion cylindrique (35a) présentant un premier diamètre externe (d1) et une deuxième portion cylindrique (35b) présentant un deuxième diamètre externe (d2) supérieur au premier diamètre externe (d1) ; et
une unité d'amortisseur arrière (8) comprenant une portion de support supérieure cylindrique (8A) dans laquelle la première portion cylindrique (35a) de la bague (35) est insérée et qui est supportée de manière pivotante par la première portion cylindrique (35a), et une portion de support inférieure (8B) supportée de manière pivotante par le groupe moteur (50), dans lequel
la première plaque de support (31) est située, en direction de la largeur du véhicule, à l'extérieur du centre (13Lc) du châssis de siège (13L, 13R) dans une section transversale verticale qui comprend une ligne centrale (35c) de la bague (35) ;
au moins une portion de la deuxième plaque de support (32) se trouve, en direction de la largeur du véhicule, vers l'intérieur d'une extrémité interne du châssis de siège (13L, 13R) en direction de la largeur du véhicule dans la section transversale verticale qui comprend la ligne centrale (35c) de la bague ;
la bague (35) est formée de telle sorte que la première portion cylindrique (35a) se trouve sur une ligne verticale (13V) qui passe par le centre (13Lc) du châssis de siège (13L, 13R) dans la section transversale verticale qui comprend la ligne centrale (35c) de la bague (35) quand la bague (35) est placée de telle sorte que la première portion cylindrique (35a) se trouve à l'extérieur de la deuxième portion cylindrique (35b) en direction de la largeur du véhicule entre la première plaque de support (31) et la deuxième plaque de support (32).

2. Véhicule à enfourcher selon la revendication 1, dans lequel
la première portion cylindrique (35a) est située à l'extérieur de la deuxième portion cylindrique (35b) en direction de la largeur du véhicule ; et
dans la section transversale verticale qui comprend la ligne centrale (35c) de la bague (35), la portion de support supérieure (8A) de l'unité d'amortisseur arrière (8) est placée sur la ligne verticale (13V) qui passe par le centre (13Lc) du châssis de siège (13L, 13R).

3. Véhicule à enfourcher selon la revendication 1, dans lequel
la première portion cylindrique (35a) est située à l'intérieur de la deuxième portion cylindrique (35b) en direction de la largeur du véhicule ; et
dans la section transversale verticale qui comprend la ligne centrale (35c) de la bague (35), la portion de support supérieure (8A) de l'unité d'amortisseur arrière (8) est placée, en direction de la largeur du véhicule, vers l'intérieur de la ligne verticale (13V) qui passe par le centre (13Lc) du châssis de siège (13L, 13R).

4. Véhicule à enfourcher selon l'une quelconque des revendications 1 à 3, dans lequel
la première plaque de support (31) est une plaque plane qui s'étend verticalement vers le bas depuis le châssis de siège (13L, 13R) ; et
la deuxième plaque de support (32) est une plaque pliée comprenant une portion de base (32a) qui s'étend vers l'intérieur en direction de la largeur du véhicule et vers le bas depuis le châssis de siège (13L, 13R), et une portion principale (32b) qui s'étend verticalement vers le bas depuis la portion de base (32a).

5. Véhicule à enfourcher selon l'une quelconque des revendications 1 à 4 dans lequel, dans la section transversale verticale qui comprend la ligne centrale (35c) de la bague (35), la dimension (35f) de la bague (35) selon la direction de la ligne centrale (35c) de la bague (35) est supérieure ou égale à la moitié de la dimension (13f) du châssis de siège (13L, 13R) selon une direction parallèle à la ligne centrale (35c) de la bague (35).

6. Véhicule à enfourcher selon l'une quelconque des revendications 1 à 5 dans lequel, sur la ligne centrale (35c) de la bague (35), la distance entre la ligne verticale (13V) qui passe par le centre (13Lc) du châssis de siège (13L, 13R) et la première plaque de support (31) est inférieure à la distance entre la ligne verticale (13V) qui passe par le centre (13Lc) du châssis de siège (13L, 13R) et la deuxième plaque de support (32).

7. Véhicule à enfourcher selon l'une quelconque des revendications 1 à 8, dans lequel un contour du châssis de siège (13L, 13R) en section transversale verticale qui comprend la ligne centrale (35c) de la bague (35) présente une forme elliptique dont la dimension (13f) en direction de la largeur du véhicule est supérieure à sa dimension (13g) en direction haut-bas.

8. Véhicule à enfourcher selon l'une quelconque des revendications 1 à 7, dans lequel la deuxième plaque de support (32) et le coffre de rangement (45) se chevauchent lorsque le véhicule est vu de l'arrière.

9. Véhicule à enfourcher selon l'une quelconque des revendications 1 à 7, dans lequel la première plaque de support (31) et la deuxième plaque de support (32) se chevauchent avec le coffre de rangement (45) lorsque le véhicule est vu de l'arrière.

10. Véhicule à enfourcher selon l'une quelconque des revendications 1 à 9, dans lequel
la bague (35) est constituée de métal ; et
le véhicule à enfourcher comprend un élément tubulaire en caoutchouc (9) interposé entre la portion de support supérieure (8A) de l'unité d'amortisseur arrière (8) et la bague (35).

11. Procédé d'assemblage du véhicule à enfourcher selon l'une quelconque des revendications 1 à 10, dans lequel
quand une première roue arrière (6) présentant une première largeur (6w) est utilisée comme roue arrière, la bague (35) est placée entre la première plaque de support (31) et la deuxième plaque de support (32), de telle sorte que la première portion cylindrique (35a) est située à l'intérieur de la deuxième portion cylindrique (35b) en direction de la largeur du véhicule ; et
quand une deuxième roue arrière (7) présentant une deuxième largeur (7w) supérieure à la première largeur (6w) est utilisée comme roue arrière, la bague (35) est placée entre la première plaque de support (31) et la deuxième plaque de support (32), de telle sorte que la première portion cylindrique (35a) est située à l'extérieur de la deuxième portion cylindrique (35b) en direction de la largeur du véhicule.
